# EUROPÄISCHE PATENTSCHRIFT

(11) **EP 0 422 521 B1**
(45) Veröffentlichungstag und Bekanntmachung des Hinweises auf die Patenterteilung: **08.06.1994**
(21) Anmeldenummer: 90119153.6
(22) Anmeldetag: 05.10.1990
(51) Int. Cl.: B01D 25/127, B01D 25/34

(54) **Filterpresse**
Filter press
Presse filtrante

(30) Priorität: 10.10.1989 DE 3933740
(43) Veröffentlichungstag der Anmeldung: 17.04.1991
(73) Patentinhaber: RITTERSHAUS & BLECHER GMBH, 42369 Wuppertal (DE)
(72) Erfinder: Oelbermann, Max, W-5630 Remscheid (DE)
(74) Vertreter: Peerbooms, Rudolf, Dipl.-Phys.

(56) Entgegenhaltungen:
- EP-A- 0 225 972
- DE-A- 1 813 792
- DE-A- 3 842 867

## Beschreibung

Die Erfindung betrifft eine Filterpresse mit einem Filterplattenpaket aus über Aufhängungen an oberen Führungsschienen aufgehängten Filterplatten, die beidseits mit Filtertüchern bespannt sind, und mit einem längs der Führungsschienen verfahrbaren Plattentransport-Schlitten, durch den jede der Filterplatten in eine von den übrigen Filterplatten getrennte Stellung vereinzelbar ist.

Derartige Filterpressen sind z. B. durch die DE-C 29 23 864 bekannt. Mittels des Plattentransport-Schlittens werden die Filterplatten zwecks Filterkuchenauswurfs nacheinander vom Filterplattenpaket abgezogen, so daß die Filterkuchenräume bei der jeweils vereinzelten Platte für einen Kuchenauswurf freigegeben sind. Da die Filterkuchen vielfach stark an den Filtertüchern haften, ist es bekannt, solche Filterpressen mit einer Einrichtung zum Abschaben des Filterkuchens zu versehen, vgl. z. B. DE-A 36 08 774. Der Einsatz solcher Schabereinrichtungen verzögert jedoch den Filterpressenbetrieb, und durch die Schaber kann es je nach Filterkuchenmaterial auch zu einer unerwünschten festen Verschmierung der Filtertücher kommen.

Durch die US-A 40 82 663 ist es bekannt, die Filtertücher an Stangen aufzuhängen und auf die seitlich über die Filtertücher hinausragenden Enden der Filterstangen mittels eines Vibrators Rüttelschläge auszuführen. Diese Rüttelschläge sind dort aber im wesentlichen parallel zur Filtertuchebene gerichtet mit der Folge, daß die Rüttelbewegung sich im oberen Bereich der Filtertücher bereits verzehrt und dagegen im unteren Bereich der Filtertücher kaum noch eine Ablösung eines anhaftenden Filterkuchens bewirkt werden kann. Zudem sind dort die Vibratoren auf gesonderten, äußeren Führungsschienen der Filterpresse angeordnet, und es sind verhältnismäßig aufwendige Steuerungseinrichtungen dort vorgesehen, um die Vibratoren jeweils auf die Filtertücher der für einen Filterkuchenauswurf vereinzelten Filterplatte auszurichten.

Durch die EP-A-0 225 972 ist eine Filterpresse bekannt, bei der der Filterkuchenabwurf jeweils gleichzeitig von Filtertüchern zweier auf Abstand verfahrener Filterplatten erfolgt. Die Filtertücher hängen an oberen Stangen und sind über an den Stangen angreifende Zugfedern stramm gespannt. Die Stangen der benachbarten Filtertücher sind durch eine Kette verbunden, die beim öffnen des Filterpaketes die Filtertücher gegen die Kraft der Zugfedern von ihrer zugehörigen Filterplatte wegzieht. Mittels einer längs der Filterpresse verfahrbaren Schütteleinrichtung werden dort auf die Stangen Vibrationsschläge ausgeübt, die entweder im wesentlichen parallel zur jeweiligen Filtertuchebene oder in Richtung auf die Filterplatten gerichtet sind. Diese Schläge bewirken dort kein ruckhaftes Strammspannen der Filtertücher. Zudem ist die dortige Schütteleinrichtung sehr aufwendig.

Der Erfindung liegt die Aufgabe zugrunde, die gattungsgemäße Filterpresse mit einer Einrichtung zur Unterstützung des Filterkuchenauswurfes auszurüsten, die sehr effektiv arbeitet und sich durch einen geringen Herstellaufwand und Platzbedarf auszeichnen soll.

Ausgehend von einer Filterpresse der eingangs genannten Art, ist die Lösung dadurch erreicht, daß eine längs der Filterpresse verfahrbare Schütteleinrichtung zum Schütteln der an oberen Stangen aufgehängten Filtertüchern vorgesehen ist, daß die Schütteleinrichtung auf dem Plattentransport-Schlitten angeordnet ist, daß die Stangen mit ihren Filtertüchern jeweils gleichzeitig von ihrer zugehörigen, vereinzelten Filterplatte wegschwenkbar sind und daß an der Filterplattenaufhängung zwei Doppelhebel gelagert sind, die jeweils an einem Ende eine der Stangen tragen und auf deren anderes Ende die Schütteleinrichtung derart einwirkt, daß die Filtertücher bei jedem Vibrationsschlag ruckhaft stramm gespannt werden.

Durch die Erfindung werden eine Reihe von Vorteilen erreicht. Zunächst hat es sich erwiesen, daß durch die über die Doppelhebel im wesentlichen quer zur Filtertuchebene gerichtete Schüttelbewegung anhaftendes Filterkuchenmaterial sehr wirksam vom Filtertuch abgeschüttelt werden kann, wobei sich dieser Abschütteleffekt über die gesamte Filtertuchfläche hinweg auswirkt, da bei der Erfindung das Filtertuch durch die Schüttelschläge jedesmal auf voller Fläche wieder ruckhaft stramm gespannt wird. Diese Arbeitsweise unterscheidet sich damit grundsätzlich von der Arbeitsweise nach der eingangs genannten US-A 40 82 663, wo die Vibrationsschläge in Richtung der Filtertuchebene auf den oberen Filtertuchrand ausgeübt werden und also bei jedem Schlag die Filtertuchaufspannung gemindert wird. Weiterhin ist von Vorteil, daß durch die Anordnung der Schütteleinrichtung auf dem Plattentransport-Schlitten sich jeweils automatisch eine korrekte Ausrichtung der Schütteleinrichtung auf die für einen Filterkuchenauswurf gerade vorbereiteten Filtertücher ergibt, so daß sich besondere Steuerungs- und Positionierungseinrichtungen erübrigen. Darüber hinaus kann die Schütteleinrichtung bei dem gattungsgemäßen Filterpressentyp ohne zusätzlichen Platzbedarf in den Plattentransport-Schlitten integriert werden.

In Weiterbildung der Erfindung kann vorgesehen werden, daß bei jeder Filterplatte die beiden Filtertuch-Stangen endseitig über Schwenkhebel an einer mit Abstand sich oberhalb des oberen Randes der Filterplatte erstreckenden Achse lose gelagert sind, die an der Filterplattenaufhängung befestigt ist, so daß bei der Filterplatte, die zwecks Kuchenauswurfs jeweils vereinzelt ist, die bei den Filtertücher gegen Federkraft von der Filterplatte weg in eine Schräglage schwenkbar sind, und daß die Schütteleinrichtung auf dem Plattentransport-Schlitten angeordnete Verstellzylinder aufweist, die in ihrer Arbeitsstellung jeweils auf das eine Ende der ebenfalls auf der Achse schwenkbar gelagerten Doppelhebel ausgerichtet sind. Die Verstellzylinder bewirken auf dem ersten Teil ihrer Kolbenabwärtsbewegung zunächst eine Schrägstellung der Filtertücher und anschließend können sie mit kurzen und raschfolgenden Hüben die Filtertücher schütteln. Den Verstellzylindern kommt bei dieser Arbeitsweise somit eine doppelte Aufgabe zu. Zum einen bewirken sie eine Schrägstellung der Filtertücher, wodurch schon der Filterkuchenauswurf begünstigt wird, und zum anderen führen sie an den schräggestellten Filtertüchern eine vibrationsartige Schüttelbewegung aus, um beispielsweise noch inselweise anhaftende Filterkuchenreste vom Filtertuch abzulösen. Gemäß einer alternativen Arbeitsweise können die Verstellzylinder jedesmal ihren vollen Hub in rascher Wiederholung ausführen, so daß die Filtertücher eine weitausholende Schüttelbewegung erfahren.

Nach weiteren Merkmalen der Erfindung kann vorgesehen werden, daß die an beiden Enden der Filtertuch-Stangen angeordneten Schwenkhebelpaare derart durch eine zwischen ihnen angeordnete Zugfeder in Richtung auf die Filterplatte belastet sind, daß die oberen Filtertuchränder bei geschlossenem Filterplattenpaket jeweils einwärts um die oberen Ecken der Filterplatte herumgespannt sind. Durch diese Maßnahmen wird sichergestellt, daß die Schüttelbewegung überwiegend mit einer senkrecht zur Filtertuchebene gerichteten Bewegungskomponente ausgeübt werden kann. Denn um das Maß, um das der obere Filterkuchenrand in der Grundstellung über die Filterplatte hinweg gebogen ist, fallen bei der Schrägstellung zunächst die Filtertücher schlaff, ehe sie am Ende des Schüttelschlages ruckhaft wieder gespannt werden, so daß anhaftendes Filterkuchenmaterial abschnellt.

Weitere Merkmale der Erfindung sind in den Unteransprüchen angegeben.

Die Erfindung wird im folgenden anhand eines in der Zeichnung dargestellten Ausführungsbeispieles näher beschrieben. In der Zeichnung zeigen :
- Fig. 1: einen Teil-Querschnitt durch eine Filterpresse nach der Erfindung,
- Fig. 2: einen Schnitt gemäß der Linie II-II in Fig. 1 zur Erläuterung der in Schüttelposition befindlichen Schütteleinrichtung der Filterpresse und
- Fig. 3: eine Ansicht analog zur Fig. 2, wobei jedoch die Schütteleinrichtung in der Grundstellung gezeigt ist.

An zwei über die Länge der Filterpresse sich erstreckenden I-Führungsschienen 1, 2, sind eine Vielzahl von Filterplatten 3 verfahrbar aufgehängt, von denen nur eine Filterplatte mit ihrem oberen Bereich in den Figuren gezeigt ist. Die Filterplatten 3 bestehen jeweils aus einer mit einer Ausnehmung, einem sogenannten Filterspiegel 4, versehenen Stützplatte 5, an deren ebener Seite eine Preßmembran 6 mittels eines Rahmens 7 festgespannt ist. An die seitlichen Enden der Filterplatte 3 ist oben ein insgesamt etwa U-förmiges Aufhängejoch 8 befestigt, an dem zwei nach oben ragende Aufhängearme 9, 10 angebracht sind, welche Laufrollen 11 tragen, die auf Sonderführungsprofilen 12 laufen, welche ihrerseits auf den unteren Innenschenkeln der I-Führungsschienen 1, 2 angebracht sind. Auf diesen unteren Innenschenkeln der Schienen 1, 2 ist ferner ein Plattentransport-Schlitten 13 verfahrbar gelagert, welcher eine steuerbare Plattenmitnehmereinrichtung 14 trägt, die mit einer auf und ab steuerbaren Mitnehmernase 15 an einem mittleren Jochstück 16 der jeweils zu transportierenden Filterplatte 3 angreift. Aufbau und Arbeitsweise einer solchen Plattenmitnahmeeinrichtung 14 sind beispielsweise in der DE-C 29 23 864 beschrieben.

Die Filterplatten 3 sind beidseits jeweils mit einem Filtertuch 17, 18 bespannt, wozu die Filtertücher oben mit Schlaufen versehen sind, in die jeweils eine Filtertuch-Stange 19, 20 eingeschoben ist. Diese Stangen 19, 20 sind endseitig über Schwenkhebel 21 bzw. 22 an einer mit Abstand sich oberhalb des oberen Randes der Filterplatte 3 erstreckenden Achse 23 lose gelagert, die ihrerseits in den Querschenkeln des U-förmigen Aufhängejoches 8 der Plattenaufhängung gelagert ist. Im mittleren Bereich sind auf dieser Achse 23 zwei Doppelhebel 24, 25 nebeneinander gelagert, die nach oben hin konvex gekrümmt sind und deren Hebelarmverhältnis etwa 1:2,5 beträgt. Die längeren Hebelarme 26, 27 der Doppelhebel tragen an ihren Enden die Filtertuch-Stangen 19, 20, wobei die beiden Doppelhebel 24, 25 symmetrisch zu der durch die Achse 23 verlaufende Vertikalmittelebene der Filterplatte angeordnet sind. Der längere Arm der Doppelhebel 24, 25 ist in der Grundstellung nahezu senkrecht gerichtet.

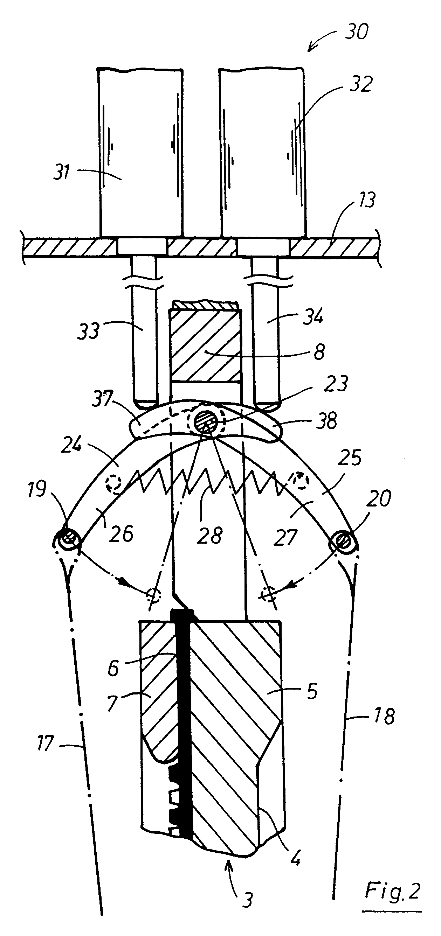

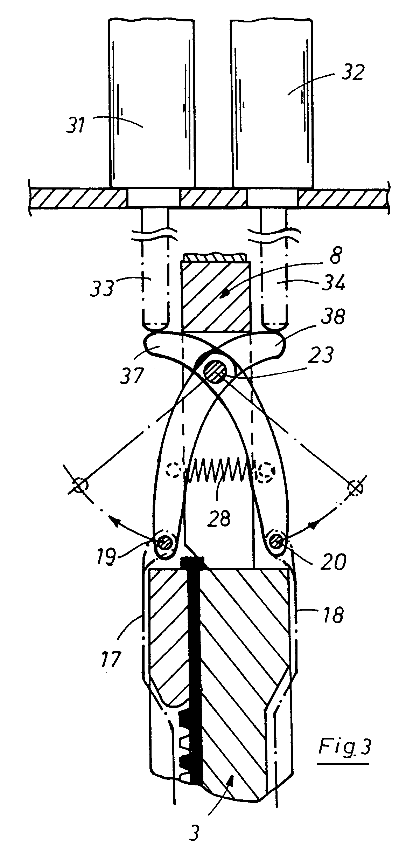

Die seitlichen Schwenkhebel 21, 22 besitzen dieselbe Form wie die längeren Hebelarme 26, 27 der mittigen Doppelhebel 24, 25, weshalb sie in den Fig. 2 und 3 verdeckt sind. An jeder Filterplattenseite ist zwischen dem Paar von Schwenkhebeln 21, 22 jeweils eine Zugfeder 28,29 eingespannt, die in der Grundstellung gemäß Fig. 3 die Filtertuchstangen 19, 20 ein deutliches Stück weit einwärts über die oberen Ecken der Filterplatte 3 hinweg ziehen, so daß zumindest der Schlaufenbereich der Filtertücher einwärts abgebogen ist.

Auf dem Transportschlitten 13 ist eine Schütteleinrichtung 30 angeordnet, welche zwei hydraulische oder pneumatische Verstellzylinder 31, 32 umfaßt, deren Kolbenstangen 33, 34 abwärts gerichtet sind und-unter Einfassung der Plattenmitnahmeeinrichtung 14 - durch Führungsrohre 35, 36 hindurch ragen und in der nicht ausgefahrenen Stellung bis zu den unteren Enden der Rohre 35, 36 etwa reichen und damit kurz oberhalb des Mitnahmejoches 16 liegen. Die Kolbenstangen 33, 34 sind jeweils auf die kurzen Arme 37, 38 der Doppelhebel 24, 25 gerichtet, wie in Fig. 3 strichpunktiert angedeutet ist. Bei einem Ausfahren der Kolbenstangen 33, 34 treffen diese auf die Hebelarme 37, 38 auf und verschwenken die Doppelhebel 24, 27 zusammen mit den Filtertuch-Stangen 19, 20 in die in Fig. 2 gezeigte Stellung, in der die Filtertücher 17, 18 in eine Schrägstellung weg von der Filterplatte 3 gezogen und wieder gespannt sind.

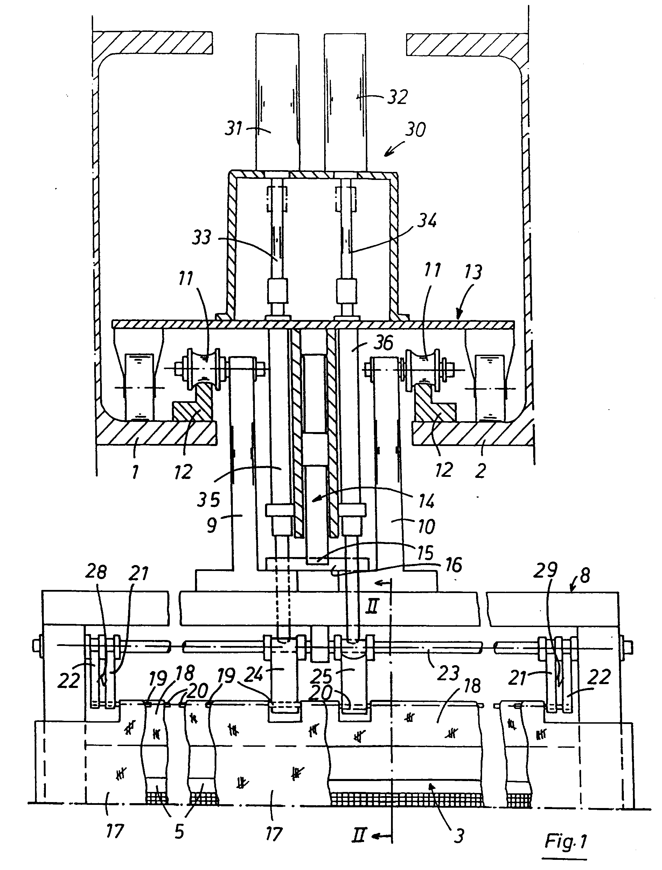

Wie aus Fig. 1 ersichtlich ist, ist die Schütteleinrichtung 30 in dem ohnehin von den beiden I-Führungsschienen 1, 2 beanspruchten Raum untergebracht und baulich in die Plattentransporteinrichtung integriert.

Beim gezeigten Ausführungsbeispiel folgen innerhalb des Filterplattenpaketes jeweils eine beidseits mit Filtertüchern 17, 18 überspannte Filterplatte 3 und eine im übrigen identische, aber nicht mit Filtertüchern überspannte Zwischenplatte 5, 6, 7 aufeinander.

## Patentansprüche

1. Filterpresse mit einem Filterplattenpaket aus über Aufhängungen (8) an oberen Führungsschienen (1, 2) aufgehängten Filterplatten (3), die beidseits mit Filtertüchern (17, 18) bespannt sind, und mit einem längs der Führungsschienen (1, 2) verfahrbaren Plattentransport-Schlitten (13) durch den jede der Filterplatten (3) in eine von den übrigen Filterplatten getrennte Stellung vereinzelbar ist, dadurch gekennzeichnet, daß eine längs der Filterpresse verfahrbare Schütteleinrichtung (30) zum Schütteln der an oberen Stangen (19, 20) aufgehängten Filtertüchern (17, 18) vorgesehen ist, daß die Schütteleinrichtung (30) auf dem Plattentransport-Schlitten (13) angeordnet ist, daß die Stangen (19, 20) mit ihren Filtertüchern (17, 18) jeweils gleichzeitig von ihrer zugehörigen, vereinzelten Filterplatte (3) wegschwenkbar sind und daß an der Filterplattenaufhängung (8) zwei Doppelhebel (24, 25) gelagert sind, die jeweils an einem Ende eine der Stangen (18, 19) tragen und auf deren anderes Ende (37, 38) die Schütteleinrichtung (30) derart einwirkt, daß die Filtertücher (17, 18) bei jedem Vibrationsschlag ruckhaft stramm gespannt werden.

2. Filterpresse nach Anspruch 1, dadurch gekennzeichnet, daß bei jeder Filterplatte (3) die beiden Filtertuch-Stangen (19, 20) endseitig über Schwenkhebel (21, 22) an einer mit Abstand sich oberhalb des oberen Randes der Filterplatte (3) erstreckenden Achse (23) lose gelagert sind, die (23) an der Filterplattenaufhängung (8) befestigt ist, so daß bei der Filterplatte (3), die zwecks Kuchenauswurfs jeweils vereinzelt ist, die beiden Filtertücher (17, 18) gegen Federkraft (28, 29) von der Filterplatte (3) weg in eine Schräglage schwenkbar sind, und daß die Schütteleinrichtung (30) auf dem Plattentransport-Schlitten (13) angeordnete Verstellzylinder (31, 32) aufweist, die in ihrer Arbeitsstellung jeweils auf das eine Ende (37, 38) der ebenfalls auf der Achse (23) schwenkbar gelagerten Doppelhebel (24, 25) ausgerichtet sind.

3. Filterpresse nach den Ansprüchen 1 und 2, dadurch gekennzeichnet, daß die an beiden Enden der Filtertuch-Stangen (19, 20) angeordneten Schwenkhebelpaare (21/22) derart durch eine zwischen ihnen angeordnete Zugfeder (28, 29) in Richtung auf die Filterplatte (3) belastet sind, daß die oberen Filtertuchränder bei geschlossenem Filterplattenpaket jeweils einwärts um die oberen Ecken der Filterplatte (3) herumgespannt sind.

4. Filterpresse nach den Ansprüchen 1 bis 3, dadurch gekennzeichnet, daß das Hebelarmverhältnis der Doppelhebel (24, 25) etwa eins zu zwei bis drei beträgt, wobei die längeren Hebelarme die Filtertuch-Stangen (19, 20) tragen.

5. Filterpresse nach Anspruch 4, dadurch gekennzeichnet, daß die Doppelhebel (24, 25) zu den Verstellzylinder (31, 32) hin konvex gekrümmt sind und daß der längere Hebelarm in der Grundstellung nahezu senkrecht gerichtet ist.

6. Filterpresse nach einem der Ansprüche 1 bis 5, dadurch gekennzeichnet, daß die Verstellzylinder (31, 32) oberhalb der Plattenmitnehmereinrichtung (14) auf dem Schlitten (13) angeordnet sind und mit ihren Kolbenstangen (33, 34) die Plattenmitnehmereinrichtung (14) zwischen sich einfassen und daß die Doppelhebel (24, 25) jeweils nahe der Mitte der Filterplatten (3) auf der Achse (23) angeordnet sind.

7. Filterpresse nach Anspruch 6, dadurch gekennzeichnet, daß die Filterplatten (3) und der Schlitten (13) jeweils auf den unteren Innenschenkeln von zwei parallelen I-Führungsschienen (1, 2) verfahrbar gelagert sind und daß die beiden Verstellzylinder (31, 32) im wesentlichen in dem von den beiden I-Führungsschienen umgrenzten Raum angeordnet sind.

## Claims

1. Filter press with a filter-plate pack consisting of filter-plates (3), hung on upper guide-beams (1,2) via mountings (8) and hung with filter-cloths (17,18) on both sides, and with a sliding plate-transporter (13), moveable along the guide-beams (1,2), by means of which each of the filter-plates (3) may be isolated into a position separate from the other filter-plates, characterized in that a vibratory device (30) is provided, moveable along the filter press, for the purpose of shaking the filter-cloths (17,18) hung upon the upper rods (19,20), in that the vibratory device (30) is located on the sliding plate-transporter (13), in that the rods (19,20) and their filter-cloths (17,18) may each be simultaneously rotated away from their respective individual filter-plate (3) and in that two double levers (24,25) are positioned on the filter-plate mounting (8), one end of each of which carries one of the rods (18,19), and upon whose other ends (37,38) the vibratory device (30) operates in such a way that the filter-cloths (17,18) are jerked taut with each vibratory stroke.

2. Filter press as claimed in Claim 1, characterized in that in the case of each filter-plate (3) the two filter-cloth rods (19,20) are loosely mounted by their ends, via rotatory levers (21,22), upon an axis (23) extending over, and at a certain distance above, the upper edge of the filter-plate (3), which (23) is fixed to the filter-plate mounting (8), so that with the filter-plate (3) individually isolated for the purpose of ejection of the filter-cake, the two filter cloths (17,18) may be rotated against the force of a spring (28,29) away from the filter-plate (3) into a slanting position, and in that the vibratory device (30) displays displacement cylinders (31,32) located upon the sliding plate-transporter (13) which in their operating position are each directed towards one end (37,38) of one of the double levers (24,25) also rotatably mounted upon the axis (23).

3. Filter press as claimed in Claims 1 and 2, characterized in that the pairs of rotatory levers (21/22) located at either end of the filter-cloth rods (19,20) are drawn towards the filter-plate (3) via a tension spring (28,29) situated between them in such a way that the upper edge areas of the filter-cloths, when the filter-plate packet is closed, are each pulled inwards over the upper corners of the filter-plate (3).

4. Filter press as claimed in Claims 1 to 3, characterized in that the relative length of the arms of the double levers (24,25) is roughly between one to two and one to three, the longer lever arms carrying the filter-cloth rods (19,20).

5. Filter press as claimed in Claim 4, characterized in that the double levers (24,25) bend convexly with respect to the displacement cylinders (31,32) and in that the longer lever arm is aligned more or less vertically in its basic position.

6. Filter press as claimed in one of Claims 1 to 5, characterized in that the displacement cylinders (31,32) are arranged above the plate-selector device (14) on the sliding transporter (13) and contain the plate-selector device (14) between their piston-rods (33,34) and in that the double levers (24,25) are each located near the centre of the filter-plates (3) on the axis (23).

7. Filter press as claimed in Claim 6, characterized in that the filter-plates (3) and the sliding transporter (13) both rest moveably upon the lower shanks of two parallel guide-beams (1,2) and in that the two displacement cylinders (31,32) are, essentially, situated in the space defined by the two guide-beams.

## Revendications

1. Filtre-presse, équipé d'un paquet de plaques-filtres, comportant des plaques filtres (3), suspendues à des rails de guidage (1, 2) supérieurs, par l'intermédiaire de suspensions (8) et équipés de toiles-filtres (17, 18) tendues sur les deux faces, et avec un chariot de transport de plaques (13), déplaçable le long des rails de guidage (1, 2), au moyen duquel chacune des plaques-filtres (3) peut être isolée, en une position séparée des autres plaques-filtres, caractérisé en ce qu'est prévu un dispositif de secouage (30), déplaçable le long du filtre-presse, pour secouer les toiles-filtres (17, 18) accrochées à des barres supérieures (19, 20), en ce que le dispositif de secouage (30) est disposé sur le chariot de transport de plaques (13), en ce que les barres (19, 20), avec leurs toiles-filtres (17, 18) peuvent être simultanément écartées par pivotement de leur plaque-filtre (3) isolée afférente, et en ce que deux leviers doubles (24, 25) sont montés sur la suspension des plaques filtres (8) qui portent chacun à une extrémité l'une des barres (18, 19) et agissent par leur autre extrémité (37, 38) sur le dispositif de secouage (30), de manière que, à chaque battement de vibration, les toiles-filtres (17, 18) soient fortement tendues, par saccade,.

2. Filtre-presse selon la revendication 1, caractérisé en ce que, pour chaque plaque-filtre (3), les deux barres (19, 20) de toile-filtre sont montées folles, à leur extrémité, par l'intermédiaire de leviers pivotants (21, 22), sur un axe (23) s'étendant à distance au-dessus du bord supérieur de la plaque-filtre (3), fixé (23) sur la suspension (8) des plaques filtres, de manière que, concernant la plaque filtre (3), ayant été isolée en vue d'éjecter le gâteau, les deux toiles-filtres (17, 18) soient susceptibles de pivoter, à l'encontre de la force de ressorts (28, 29), pour s écarter de la plaque filtre (3) et prendre une position oblique, et en ce que le dispositif de secouage (30) présente des vérins de réglage (31, 32), disposés sur le chariot de transport des plaques (13) et alignés dans leur position de travail chacun sur une extrémité (37, 38) des leviers doubles (24, 25) également montés pivotants sur l'axe (23).

3. Filtre-presse selon les revendications 1 et 2, caractérisé en ce que les couples de leviers pivotants (21, 22) disposés aux deux extrémités des barres à toile-filtre (19, 20) sont chargés en direction de la plaque-filtre (3), par un ressort de traction (28, 29) disposé entre eux, de manière que, lorsque le paquet de plaques-filtres est fermé, les bords supérieurs des toiles-filtres soient chacun tendus en contournant, vers l'intérieur, les angles supérieurs de la plaque-filtre (3).

4. Filtre-presse selon les revendications 1 à 3, caractérisé en ce que le rapport des bras de levier des leviers doubles (24, 25) est d'à peu près un à trois, les bras de levier longs portant les barres de toile-filtre (19, 20).

5. Filtre-presse selon la revendication 4, caractérisé en ce que les leviers doubles (24,25) présentent une courbure convexe tournée vers les vérins de réglage (31, 32), et en ce que le bras de levier long est orienté à peu perpendiculairement, dans la position de base.

6. Filtre-presse selon l'une des revendications 1 à 5, caractérisé en ce que les vérins de réglage (31, 32) sont disposés sur le chariot (13), au-dessus du dispositif d'entraînement des plaques (14), et enserrent entre eux, par leurs tiges de piston (33, 34), le dispositif d'entraînement des plaques (14), et les leviers doubles (24, 25) sont chacun montés sur l'axe (23), près de la mi-longueur des plaques-filtres (3).

7. Filtre-presse selon la revendication 6, caractérisé en ce que les plaques-filtres (3) et le chariot (13) sont montés déplaçables, chacun sur la branche intérieure inférieure de deux rails de guidage (1, 2) en I parallèles et en ce que les deux vérins de réglage (31, 32) sont disposés sensiblement dans l'espace dèlimité extérieurement par les deux rails de guidage en I.
